# EUROPEAN PATENT APPLICATION

(11) **EP 4 400 656 A1**
(43) Date of publication of application: **17.07.2024**
(21) Application number: 23218749.2
(22) Date of filing: 20.12.2023
(51) Int. Cl.: E02F 9/08, B60H 1/00, E02F 9/16

(54) **AIRFLOW GENERATION SYSTEM AND WORK MACHINE**

(30) Priority: 06.01.2023 JP 2023000876
(71) Applicant: Yanmar Holdings Co., Ltd., Osaka-shi, Osaka (JP)
(72) Inventor: AKIYAMA, Yukifumi, Chikugo-shi (JP); HAYAMA, Yoshihito, Chikugo-shi (JP)
(74) Representative: Dennemeyer & Associates S.A.

(57) **Abstract**

[Problem] An airflow generation system and a work machine in which a passenger is less likely to block an airflow is provided.

[Solution] The airflow generation system 1 is employed in a work machine having a passenger section 2 including a passenger seat 21 and a wall portion 22, and includes an airflow generator and an air outlet 11. The airflow generator generates an airflow. The air outlet 11 is disposed at a position facing the passenger section 2, and blows an airflow into the passenger section 2. When a direction in which the passenger seat 21 faces the wall portion 22 is determined as a first direction and a direction orthogonal to the first direction in a plan view is determined as a second direction, the air outlet 11 is disposed on one side in the second direction when viewed from the passenger seat 21 to allow the airflow to pass through a gap space formed between the passenger seat 21 and the wall portion 22.

## Description

### TECHNICAL FIELD

The present disclosure relates to an airflow generation system employed in a work machine having a passenger section including a passenger seat, and the work machine.

### BACKGROUND ART

As a related art, a work machine (hydraulic excavator) including a turn frame to which a work implement having a boom, an arm, a bucket, and the like is attached is known (for example, refer to Patent Document 1).

In the related art, an airflow generation system (air conditioner) is installed in a passenger section (cab) of the turn frame. The airflow generation system includes an airflow generator (air conditioning unit) attached to a front portion of a right side surface of the passenger section and a duct that sends air from the airflow generator to a front glass of the passenger section. The duct is disposed on an interior cover that covers the airflow generator.

### PRIOR ART DOCUMENT

### PATENT DOCUMENT

Patent Document 1: Japanese Unexamined Patent Application Publication No. 2008-285162

### SUMMARY OF INVENTION

### TECHNICAL PROBLEM

In the airflow generation system according to the related art, for example, when a passenger (operator) sits on a passenger seat (operator seat), an airflow from the airflow generator located on a right side as viewed from the passenger may be blocked by the passenger and may not easily reach a space on a left side as viewed from the passenger.

An object of the present disclosure is to provide an airflow generation system and a work machine in which a passenger is less likely to block an airflow.

### SOLUTION TO PROBLEM

According to an aspect of the present disclosure, the airflow generation system is employed in the work machine having a passenger section including a passenger seat and a wall portion and includes an airflow generator and an air outlet. The airflow generator generates an airflow. The air outlet is disposed in a position facing the passenger section and blows out the airflow to an inside of the passenger section. When a direction in which the passenger seat faces the wall portion is determined as a first direction and a direction orthogonal to the first direction in a plan view is determined as a second direction, the air outlet is disposed on one side in the second direction when viewed from the passenger seat to allow the airflow to pass through a gap space formed between the passenger seat and the wall portion.

As described above, the airflow generation system according to an aspect of the present disclosure is employed in the work machine having the passenger section including the passenger seat and the wall portion. In the airflow generation system, when a direction in which the passenger seat faces the wall portion is determined as a first direction and a direction orthogonal to the first direction in a plan view is determined as a second direction, an airflow is allowed to pass through a gap space formed between the passenger seat and the wall portion from one side of the second direction to the other when viewed from the passenger seat.

A work machine according to an aspect of the present disclosure includes the airflow generation system and a machine body on which the display device is mounted.

### ADVANTAGEOUS EFFECTS OF INVENTION

According to the present disclosure, an airflow generation system and a work machine in which a passenger is less likely to block an airflow may be provided.

### BRIEF DESCRIPTION OF DRAWINGS

FIG. 1 is a perspective view schematically illustrating an overall configuration of a work machine according to a first embodiment.
FIG. 2 is a perspective view schematically illustrating appearance of a passenger section of the work machine according to the first embodiment.
FIG. 3 is a perspective view schematically illustrating an interior of the passenger section of the work machine according to the first embodiment.
FIG. 4 is a perspective view schematically illustrating the interior of the passenger section of the work machine according to the first embodiment.
FIG. 5 is a perspective view schematically illustrating an airflow generation system according to the first embodiment.
FIG. 6 is an exploded perspective view schematically illustrating the airflow generation system according to the first embodiment.
FIG. 7 is a perspective view schematically illustrating a duct of the airflow generation system according to the first embodiment.
FIG. 8 is a plan view schematically illustrating the duct of the airflow generation system according to the first embodiment.
FIG. 9 is a left side view schematically illustrating the duct of the airflow generation system according to the first embodiment.
FIG. 10 is a rear view schematically illustrating the duct of the airflow generation system according to the first embodiment.
FIG. 11 is a left side view schematically illustrating the interior of the passenger section of the work machine according to the first embodiment.
FIG. 12 is a perspective view schematically illustrating the interior of the passenger section of the work machine according to the first embodiment.
FIG. 13 is a plan view schematically illustrating the interior of the passenger section of the work machine according to the first embodiment.
FIG. 14 is a diagram illustrating a result of simulation of the airflow generation system according to the first embodiment.
FIG. 15 is a diagram illustrating a result of simulation of an airflow generation system according to a second embodiment.

### DESCRIPTION OF EMBODIMENTS

Hereinafter, embodiments of the present disclosure will be described with reference to the accompanying drawings. The following embodiments are examples that embody the present disclosure and are not intended to limit the technical scope of the present disclosure.

### First Embodiment

### 1 Overall Configuration

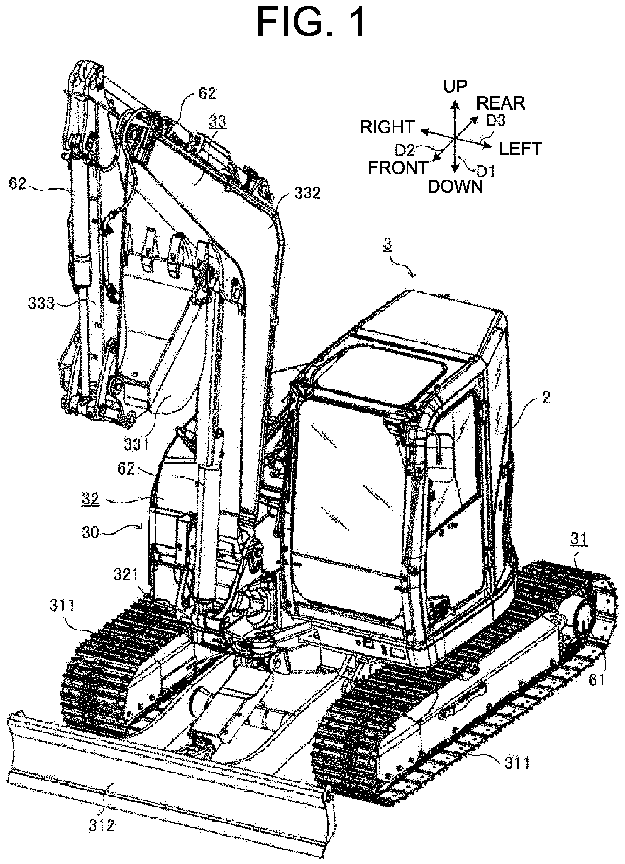

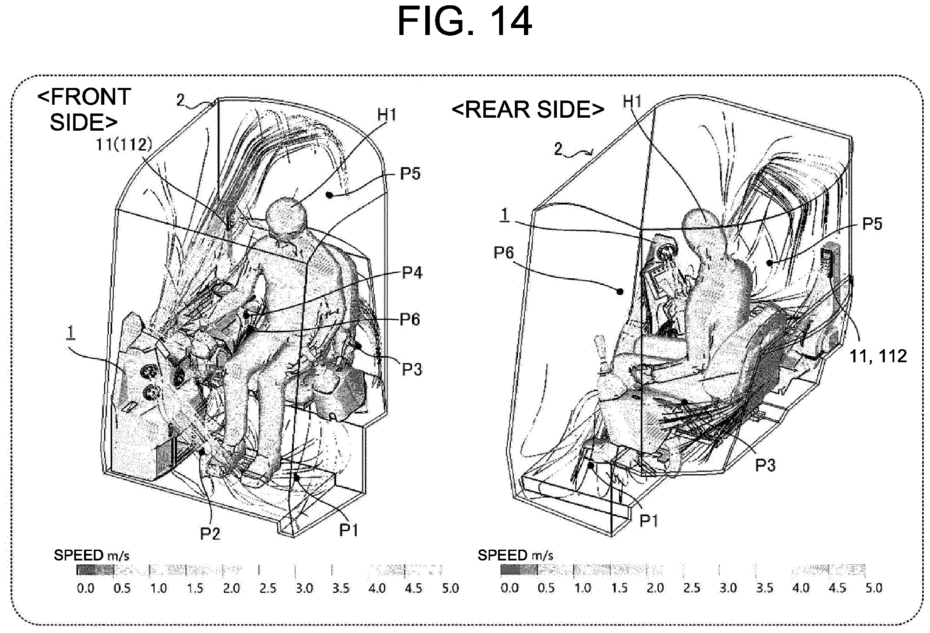

As illustrated in FIGS. 1 to 3, a work machine 3 according to a first embodiment includes a passenger section 2 in which at least a passenger H1 (refer to FIG. 14) can board. The passenger section 2 includes a passenger seat 21 and a wall portion 22. The passenger H1 sits on the passenger seat 21. The work machine 3 further includes an airflow generation system 1. The airflow generation system 1 is mounted on a machine body 30 of the work machine 3. That is, the work machine 3 includes the airflow generation system 1 and the machine body 30 on which the airflow generation system 1 is mounted.

According to this embodiment, in the work machine 3, the machine body 30 includes a traveling section 31, a turning section 32, and a work section 33. The passenger section 2 in which the passenger H1 is seated is disposed in the turning section 32. In addition, the work machine 3 further includes a display device 34, an operation device 35, a control device, and a monitoring device (including various sensors and cameras).

The term "work machine" in the present disclosure refers to a machine for performing various types of work, and examples thereof include work vehicles, such as a backhoe (including a hydraulic excavator and a mini excavator), a wheel loader, and a carrier. The work machine 3 includes the work section 33 capable of performing one or more types of work.

The work machine 3 is not limited to "vehicles" and may be, for example, a working vessel, a working projectile, such as a drone or a multicopter, or the like. Furthermore, the work machine 3 is not limited to a construction machine (construction equipment), but may also be an agricultural machine (agricultural equipment), such as a rice transplanter, a tractor, or a combined harvester. In this embodiment, unless otherwise specified, a case where the work machine 3 is a riding-type backhoe which can perform excavation work, ground leveling work, trench excavation work, loading work, or the like as a type of work will be described as an example. More specifically, it is assumed that, in the work machine 3 according to this embodiment, the turning section 32 including the work section 33 is of an "ultra-small turning" type that can fully turn within 120% of a total width of the traveling section 31 (a total width of a pair of right and left crawlers 311) or a "rear ultra-small turning" type with a rear turning radius ratio of 120% or less.

Furthermore, in this embodiment, as an example, it is assumed that the passenger H1 who boards the passenger section 2 is an operator (operating person), and the work machine 3 moves when being operated by the operator. However, the passenger H1 is not limited to the operator, and for example, in a case where the work machine 3 is moved by remote control or automatic driving, the passenger H1 may be a person who boards the work machine 3 for the purpose of monitoring, inspection (maintenance), or the like. Furthermore, a plurality of passengers H1 may be simultaneously on board. In this case, a plurality of passenger seats 21 may be disposed in the single passenger section 2.

In this embodiment, for convenience of explanation, a vertical direction in a state in which the work machine 3 can be used is defined as an up-down direction D1. Furthermore, a front-rear direction D2 and a right-left direction D3 are defined with reference to a direction seen by the passenger H1 (operator) seated on the passenger section 2 of the work machine 3. In other words, the individual directions used in this embodiment are defined with reference to the passenger section 2 of the work machine 3, and a direction in which the machine body 30 moves when the work machine 3 moves forward is a "front direction" while a direction in which the machine body 30 moves when the work machine 3 moves backward is a "rear direction". Similarly, a direction in which a front end portion of the machine body 30 moves when the work machine 3 turns right is a "right direction" and a direction in which the front end of the machine body 30 moves when the work machine 3 turns left is a "left direction". Since the passenger section 2 is disposed on the turning section 32, the front-rear direction D2 and the right-left direction D3 with respect to the traveling section 31 change as the turning section 32 turns. Thus, in the following, the directions are defined in a state in which the front of the passenger section 2 faces a traveling direction of the traveling section 31 as illustrated in FIG. 1. However, these directions are not meant to limit a direction in which the work machine 3 is used (direction during use).

The work machine 3 includes an engine as a power source. In this embodiment, as an example, the engine is a diesel engine. The engine is driven by fuel (light oil in this case) supplied from a fuel tank. In the work machine 3, a hydraulic pump is driven by the engine, for example, and hydraulic oil is supplied from the hydraulic pump to hydraulic actuators (including hydraulic motors 61 and hydraulic cylinders 62 and the like) of the various sections of the machine body 30, thereby to drive the machine body 30.

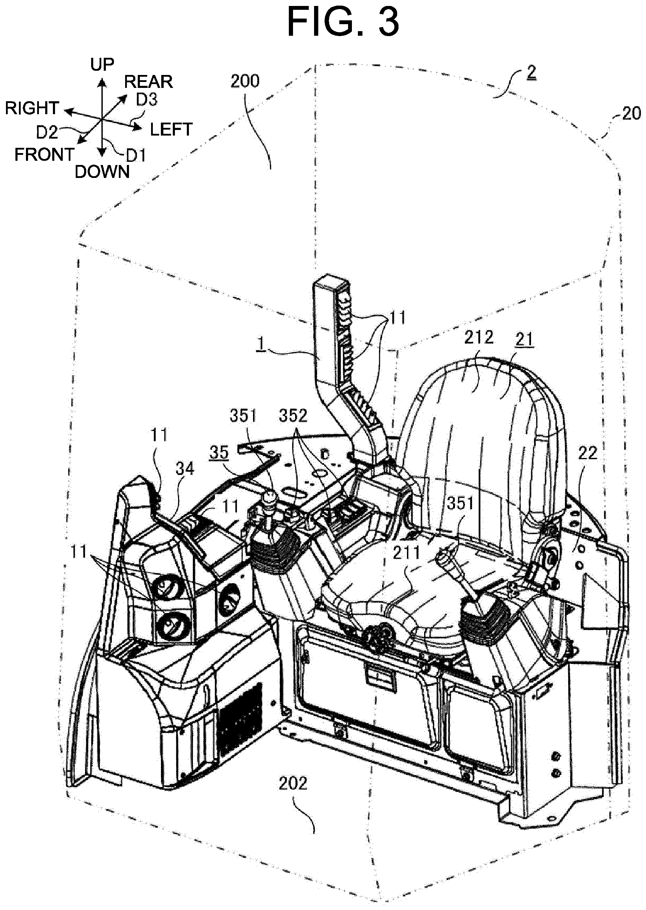

The work machine 3 may be controlled by the user (operator), who is boarding the passenger section 2 of the machine body 30, operating operation levers 351 (refer to FIG. 3) of the operation device 35, for example.

In this embodiment, the work machine 3 is assumed to be a boarding-type backhoe as described above and thus, the work section 33 is driven in accordance with an operation performed by the passenger H1 (operator) boarding the passenger section 2 and performs tasks, such as excavation work. The work section 33 is supported by the turning section 32 including the passenger section 2. Therefore, when the turning section 32 turns, the work section 33 turns together with the passenger section 2.

The passenger section 2 of the machine body 30 includes the display device 34 and the operation device 35. The passenger H1 can operate the operation device 35 while viewing various types of information relating to the work machine 3 displayed on the display device 34. As an example, a display screen of the display device 34 displays information relating to an operation state of the work machine 3, such as a cooling water temperature and a hydraulic oil temperature, so that the passenger H1 can confirm the information relating to the operation state of the work machine 3 required for operating the operation device 35 on the display device 34.

The traveling section 31 has a traveling function and is capable of traveling (also turning) on the ground. The traveling section 31 includes, for example, a pair of right and left crawlers 311 and a blade 312. The traveling section 31 further has hydraulic motors 61 (hydraulic actuators) for traveling that drives the crawlers 311, and the like.

The turning section 32 is disposed on the traveling section 31 and is capable of turning, relative to the traveling section 31, about a rotation shaft extending in a vertical direction. The turning section 32 includes a hydraulic motor or the like as a hydraulic actuator for turning. The turning section 32 includes the engine and the hydraulic pump in addition to the passenger section 2. Furthermore, a boom bracket 321, to which the work section 33 is attached, is disposed on a front end portion of the turning section 32.

The work section 33 is capable of performing one or more tasks. The work section 33 is supported by the boom bracket 321 of the turning section 32 and performs tasks. The work section 33 includes a bucket 331. The bucket 331 is a type of attachments (work implements) that may be attached to the machine body 30 of the work machine 3 and is any implement selected from a plurality of types of attachments according to content of a task. As an example, the bucket 331 is detachably attached to the machine body 30 and replaced according to content of a task. Examples of the (end) attachments for the work machine 3 include, in addition to the bucket 331, various implements, such as a breaker, an auger, a crusher, a fork, a fork claw, a steel frame cutter, an asphalt cutting machine, a grass cutter, a ripper, a mulcher, a tiltrotator, and a tamper.

The work section 33 further includes a boom 332, an arm 333, and the hydraulic actuators (including the hydraulic cylinders 62 and the hydraulic motor). The bucket 331 is attached to a tip end of the arm 333. The bucket 331 is supported by the arm 333 in a manner to be rotatable about a rotation shaft extending in a horizontal direction.

The boom 332 is supported by the boom bracket 321 of the turning section 32 in a rotatable manner. Specifically, the boom 332 is supported by the boom bracket 321 in a manner to be rotatable around a rotation shaft extending in the horizontal direction. The boom 332 has a shape extending upward from a base end portion supported by the boom bracket 321. The arm 333 is coupled to a tip end of the boom 332. The arm 333 is supported by the boom 332 in a manner to be rotatable about a rotation shaft extending in the horizontal direction.

The work section 33 moves when receiving power from the engine serving as a power source. Specifically, a hydraulic pump is driven by the engine, and the hydraulic oil is supplied from the hydraulic pump to the hydraulic actuators (hydraulic cylinders 62, etc.) of the work section 33, thereby causing the individual sections of the work section 33 (bucket 331, boom 332, and arm 333) to move.

In particular, in this embodiment, the work section 33 has a multi-joint structure in which the boom 332 and the arm 333 are individually rotatable. That is, each of the boom 332 and the arm 333 is rotated around the rotation shaft extending in the horizontal direction, so that, for example, the articulated work section 33 including the boom 332 and the arm 333 can take motions of extending and folding as a whole. Furthermore, the bucket 331 as an attachment is supported by the machine body 30 (the turning section 32) via the boom 332 and the arm 333, and can be opened/closed when the bucket 331 itself rotates with respect to the arm 333.

Each of the traveling section 31 and the turning section 32 also move when receiving the power from the engine serving as the power source, similarly to the work section 33. Specifically, the turning section 32 and the traveling section 31 move when the hydraulic pump supplies hydraulic oil to the hydraulic motor of the turning section 32 and the hydraulic motors 61 of the traveling section 31, respectively.

Furthermore, the work machine 3 further includes a driving device (mechanism), such as power take-off (PTO) for supplying power to the bucket 331 (attachment). Specifically, the driving device sends the hydraulic oil from the hydraulic pump driven by the engine to the bucket 331, and an amount of the power supplied to the bucket 331 is adjusted by adjusting a flow rate of the hydraulic oil. Here, the driving device has a plurality of (four as an example in this embodiment) PTO ports, that is, output ports (hereinafter, referred to as "PTO1", "PTO2", "PTO3", and "PTO4"). PTO1 to the PTO4 can separately regulate the power, that is, the flow rate of the hydraulic oil.

The passenger section 2 is a space for the passenger H1 to board, and is installed in the turning section 32 in this embodiment. Specifically, when the turning section 32 is divided into two in the right-left direction D3, the passenger section 2 is installed on its left side. The passenger section 2 includes at least the passenger seat 21 (refer to FIG. 1) on which the passenger H1 sits, and the wall portion 22 located behind the passenger seat 21. The passenger section 2 will be described in detail in the section "2 Details of Passenger Section".

As illustrated in FIG. 3, the airflow generation system 1 is installed in the passenger section 2 of the machine body 30 and sends an airflow into the passenger section 2. In this embodiment, an air conditioning system capable of performing cooling or heating by outputting cool air or warm air is an example of the airflow generation system 1. That is, the airflow generation system 1 can maintain the environment in the passenger section 2 in a comfortable state for the passenger H1 (operator) by sending cool air having a lower temperature or warm air having a higher temperature than an air temperature of an outside (outside air temperature) of the passenger section 2 into the passenger section 2 as an airflow. In this embodiment, the airflow generation system 1 is electrical equipment, and moves when receiving power supply from a battery. The airflow generation system 1 will be described in detail in the section "3 Details of Airflow Generation System".

The display device 34 is installed in the passenger section 2 of the machine body 30 as illustrated in FIG. 3 and serves as a user interface for outputting various types of information to the passenger H1 (operator). The display device 34 is controlled by a control device and presents (outputs) various types of information by displaying various screens. The display device 34 may have a function of outputting sound (including voice) in addition to the display function, and present various types of information by sound. Furthermore, in this embodiment, the display device 34 includes an inputter, such as a touch panel, that outputs an electrical signal in response to an operation performed by the passenger H1 so as to accept various operations performed by the user. As a result, the passenger H1 can visually recognize a display screen displayed on the display device 34 and operate the display device 34 as necessary.

The operation device 35 is installed in the passenger section 2 of the machine body 30 as illustrated in FIG. 3 and serves as a user interface for accepting operation inputs performed by the passenger H1 (operator). In this embodiment, as one example, the operation device 35 includes the pair of operation levers 351 and various operation switches 352 (refer to FIG. 3).

The operation levers 351, as the pair, are located on opposite sides in the right-left direction D3 of a front end portion of the passenger seat 21.

Accordingly, the passenger H1 seated on the passenger seat 21 holds one of the operation levers 351 with a right hand and holds the other of the operation levers 351 with a left hand, for example, and operates the pair of operation levers 351 to cause various motions of the work machine 3.

The operation switch 352 is an electric operation device and accepts any of various operations performed by the passenger H1 by outputting an electrical signal (operation signal) corresponding to the operation performed by the passenger H1 to the control device. The operation switch 352 includes, for example, a main switch that operates in conjunction with a key cylinder. The main switch is operated by the passenger H1 at a time of activation of the work machine 3, and is turned on when an engine activation operation (ignition on) is performed using a key. While the main switch is off, power is not supplied to the airflow generation system 1 and the like, and the airflow generation system 1 and the like are not activated. The airflow generation system 1 and the like enter a movable state only after the main switch is turned on.

The control device executes at least control of the airflow generation system 1. The control device is mainly configured by a computer system having one or more processors, such as a central processing unit (CPU), and one or more memories, such as a read only memory (ROM) and a random access memory (RAM), and executes various processes (information processing). In this embodiment, the control device is an integrated controller that controls the entire work machine 3, and includes an electronic control unit (ECU), for example. Note that the control device may be provided separately from the integrated controller, and may be primarily composed of one or more processors.

The monitoring device has, for example, a function of capturing a peripheral image of the machine body 30, a function of detecting postures of the individual sections of the machine body 30, and the like. Data acquired by the monitoring device is output to the control device. An image captured by the monitoring device is displayed on the display device 34 in real time, for example.

Furthermore, in addition to the above-mentioned components, the work machine 3 further includes a cutoff lever (gate lock lever), a communication terminal, a fuel tank, and a battery. The cutoff lever can be operated between a "raised position" and a "lowered position", and when the cutoff lever is in the "raised position", the motion of the work machine 3 is forcibly restricted regardless of the operation of the operation device 35.

### 2 Details of Passenger Section

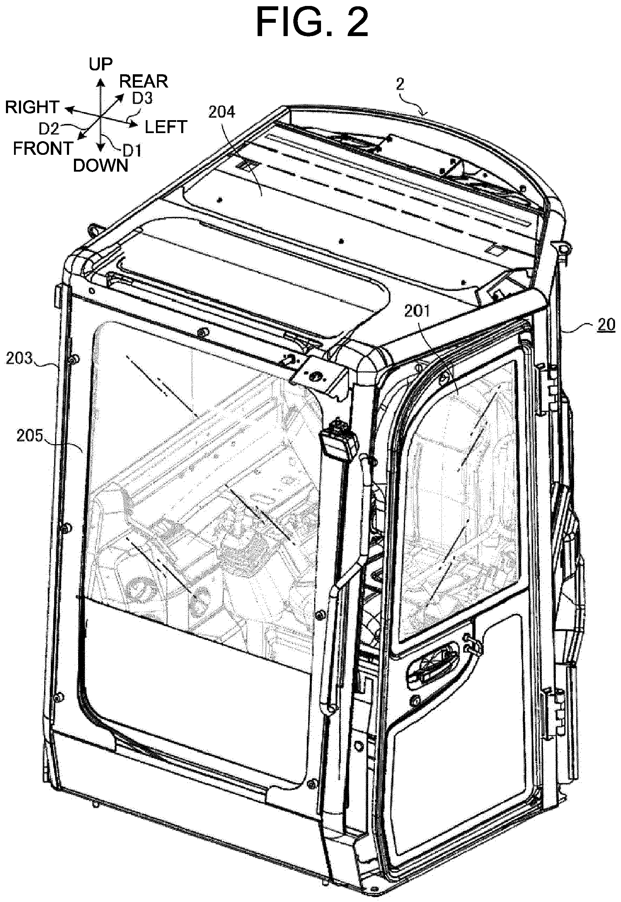

Next, a detailed description will be made on a configuration of the passenger section 2 with reference to FIGS. 2 to 4. In FIG. 3, an outer shape of the cabin 20 is schematically indicated by an imaginary line (two dot chain line).

Types of the passenger section 2 of the work machine 3, such as a construction machine, include a cabin type, a canopy type, and a floor type. The cabin-type passenger section 2 includes a cabin 20, and the passenger H1 boards on a cabin space 200 inside the cabin 20. The canopy-type passenger section 2 includes a canopy (roof), and the passenger H1 boards on a space below the canopy.

The floor-type passenger section 2 does not include the cabin 20, the canopy, or the like, and the passenger H1 boards on a space opened upward. That is, the passenger section 2 may be not only surrounded by panels or the like, but also provided as various forms, such as a space in which the passenger H1 may board. In this embodiment, a case where the passenger section 2 is of a cabin type will be described as an example.

In this embodiment, the passenger section 2 is disposed on a left side portion of the machine body 30 of the work machine 3. Furthermore, the passenger section 2 is positioned over the left crawler 311 (refer to FIG. 1). With such an arrangement, the passenger H1 gets on and off the passenger section 2 from a left side of the passenger section 2. Therefore, in this embodiment, a door 201 of the passenger section 2 is disposed on the left side of the passenger section 2 in the right-left direction D3. That is, the passenger H1 gets on and off the passenger section 2 through the door 201 disposed on the left side of the passenger section 2.

The cabin-type passenger section 2 includes the cabin 20 shaped to cover a floor 202.

The cabin 20 includes a cabin frame 203 and a cabin roof 204. In other words, the cabin 20 forms an outer shell of the passenger section 2, and the passenger H1 boards inside (in an interior of) the cabin 20.

The cabin frame 203 is a structure serving as a framework of the cabin 20, and is formed so as to surround the cabin space 200. The cabin roof 204 is disposed over the cabin frame 203 and is supported above the floor 202 by the cabin frame 203. The cabin roof 204 has a substantially rectangular shape in a plan view and is formed to have a size that covers the entire passenger section 2.

The cabin 20 further includes panel members 205 including a glass panel serving as a windshield. The panel members 205 are appropriately attached to both sides of the cabin frame 203 in the front-rear direction D2 and both sides of the cabin frame 203 in the right-left direction D3, so as to surround the cabin space 200 from the four sides together with the door 201.

The door 201 is disposed on an opening portion provided on the left side of the panel member 205, and is rotatable between a "closed position" at which the opening portion is covered and an "open position" at which the opening portion is opened so that the passenger H1 can pass therethrough. Examples of a type of the door 201 include a "front opening type" in which the front side in the front-rear direction D2 is opened and a "rear opening type" in which a rear side is opened. In this embodiment, as an example, the door 201 is of the front opening type. Furthermore, in this embodiment, the door 201 is opened outward, and the door 201 is opened by an operation of pulling a front end portion, which is a free end of the door 201, to an near side (outside of the passenger section 2) when viewed from a front (the left side in this embodiment) of the door 201 outside the passenger section 2.

According to the above-described configuration, at a time of boarding on the passenger section 2, the passenger H1 boards the cabin space 200 inside the cabin 20 in a state where the door 201 is opened (at an open position), and finishes the boarding on the passenger section 2 by closing the door 201 (to a closed position). On the other hand, at a time of getting out of the passenger section 2, the passenger H1 can go outside the cabin 20 with the door 201 opened (at the open position), and can get out of the passenger section 2 by closing the door 201 (to the closed position). In particular, in the cabin type passenger section 2 provided with the cabin 20 as in this embodiment, at least the cabin frame 203 has a function as a skeleton of the cabin 20, and has sufficient strength (rigidity) to support the cabin roof 204, the door 201, and the like. Furthermore, the cabin 20 may be detachable from the machine body 30 of the work machine 3.

Moreover, exterior parts, such as various sensors and mirrors, may be mounted on the cabin roof 204 (or the cabin frame 203).

The passenger seat 21, the display device 34, the operation device 35, and the like are disposed in the cabin space 200 inside (in an interior of) the cabin 20. Furthermore, in the airflow generation system 1, at least an air outlet 11 for blowing out an airflow into the passenger section 2 is disposed at a position facing the cabin space 200.

The passenger seat 21 includes a seat surface portion 211 and a backrest portion 212. The seat surface portion 211 is disposed at a position closer to a rear side in the front-rear direction D2 and closer to a left side in the right-left direction D3 with respect to a center portion of the cabin space 200 in a plan view. The backrest portion 212 may have a reclining function.

The display device 34 is disposed on a front side in the front-rear direction D2 and on a right side in the right-left direction D3 when viewed from the passenger seat 21. In this way, the passenger H1 who is seated on the passenger seat 21 can check display on the display device 34 without a significant change in a posture. An instrument panel 24 is disposed on the front side in the front-rear direction D2 and on the right side in the right-left direction D3 as viewed from the passenger seat 21, and the display device 34 is installed in the instrument panel 24.

The operation levers 351 of the operation device 35 are located on opposite sides of the front end portion of the passenger seat 21 in the right-left direction D3 as the pair as described above. At least some of the operation switches 352 are disposed on the right side in the right-left direction D3 when viewed from the passenger seat 21. In this way, the passenger H1 who is seated on the passenger seat 21 can operate the operation device 35 without a significant change in the posture.

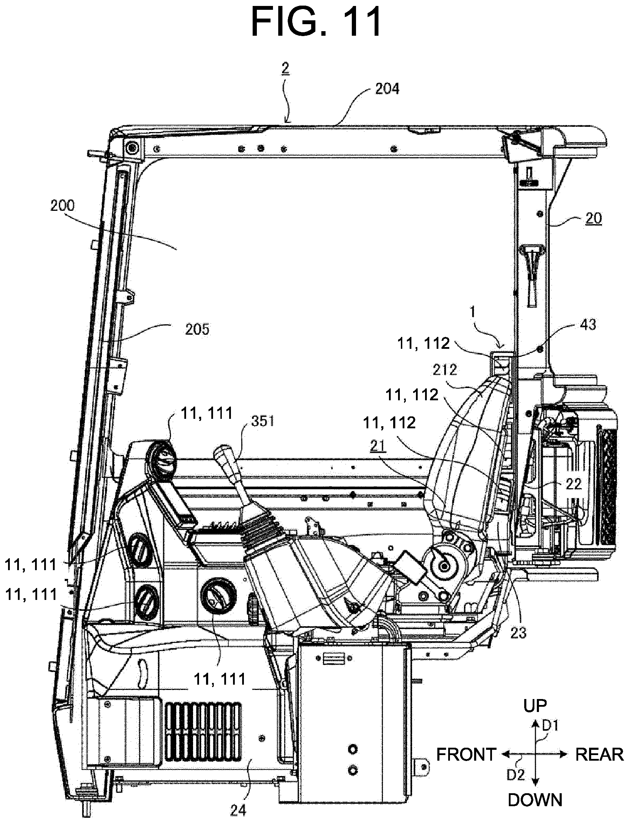

The passenger section 2 has the wall portion 22 positioned on one side in the front-rear direction D2 or the right-left direction D3 when viewed from the passenger seat 21. In this embodiment, the wall portion 22 is disposed behind the passenger seat 21. Here, a gap space 23 (refer to FIG. 11) is secured between the backrest portion 212 of the passenger seat 21 and the wall portion 22. In other words, (the backrest portion 212 of) the passenger seat 21 and the wall portion 22 face each other in the front-rear direction D2 through the gap space 23. The reclining of the backrest portion 212 changes a size of the gap space 23.

The wall portion 22 separates the inside (cabin space 200) of the passenger section 2 from the outside. In this embodiment, as an example, a condenser (heat exchanger) and the like of the airflow generation system 1 are disposed behind the wall portion 22, that is, on a side opposite to the passenger seat 21 when viewed from the wall portion 22. A size of the wall portion 22 in the up-down direction D1 is set to be relatively small. In this embodiment, as an example, a height of the wall portion 22 is set to be higher than the seat surface portion 211 and lower than the backrest portion 212. Furthermore, the wall portion 22 is inclined with respect to the up-down direction D1 so that a front surface thereof faces obliquely upward.

### 3 Details of Airflow Generation System

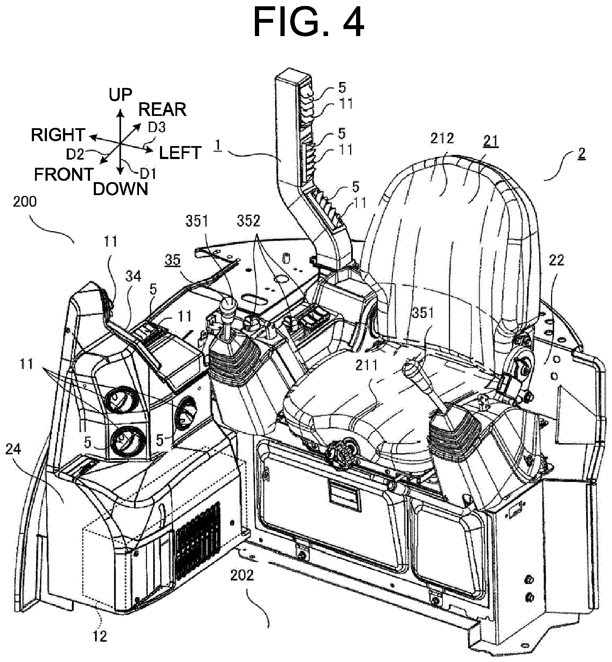

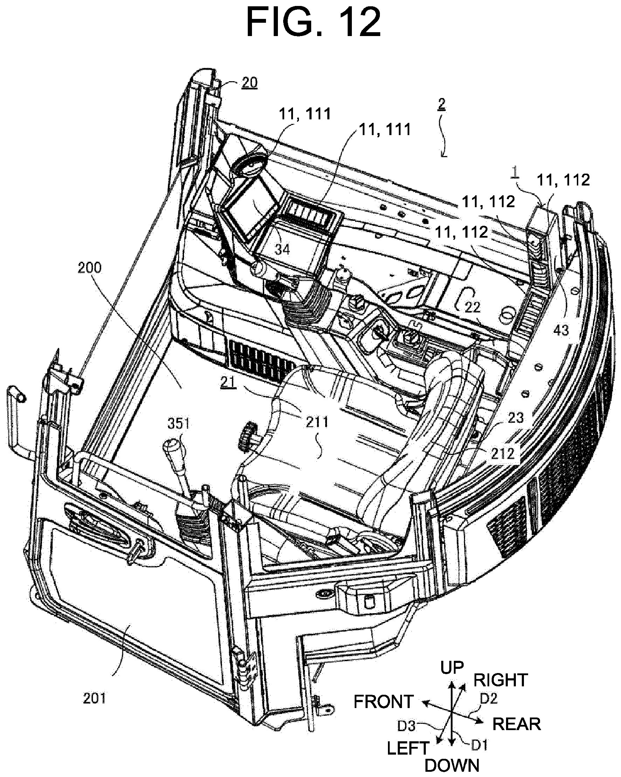

Next, a configuration of the airflow generation system 1 according to this embodiment will be described with reference to FIGS. 4 to 13. FIGS. 11 to 13 show a model in which the cabin 20 is appropriately cut in order to illustrate the inside of the passenger section 2.

As described above, the airflow generation system 1 is used for the work machine 3 having the passenger section 2 including the passenger seat 21 and the wall portion 22. The airflow generation system 1 includes an airflow generator 12 (refer to FIG. 4) and air outlets 11. The airflow generator 12 generates an airflow. The air outlets 11 are disposed at positions facing the passenger section 2, and blows an airflow into the passenger section 2.

In this embodiment, since an air conditioning system capable of performing cooling or heating is an example of the airflow generation system 1, the airflow generator 12 generates an airflow formed of cool air or warm air. That is, when the airflow generation system 1 is activated in a cooling mode, the airflow generator 12 generates an airflow formed of cold air having a temperature lower than an outside air temperature. When the airflow generation system 1 is activated in a heating mode, the airflow generator 12 generates an airflow formed of warm air having a temperature higher than the outside air temperature. Furthermore, the airflow generator 12 may have an air blowing mode for generating not only the cool air or the warm air but also an airflow having the same temperature as the outside air temperature.

The airflow generator 12 includes a fan or the like, and generates an airflow under control of the control device. The airflow generator 12 can adjust strength (air volume) of the airflow to be generated. Therefore, the airflow generation system 1 performs cooling and heating operations so that an air temperature in the passenger section 2 approaches a target temperature by adjusting the temperature and the air volume of the airflow. The airflow generator 12 is disposed at a position covered by the instrument panel 24 on which the display device 34 and the like are disposed.

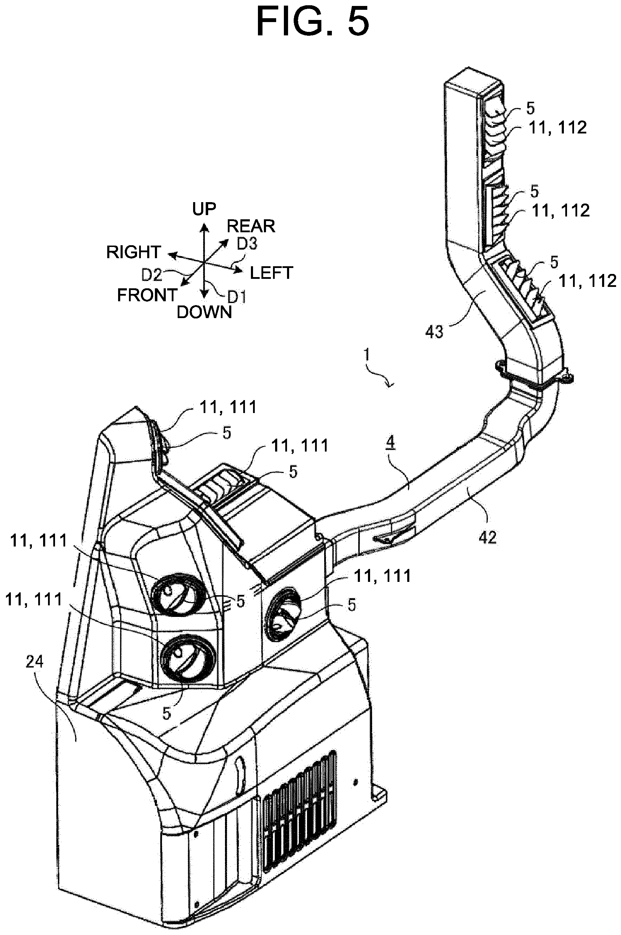

The air outlets 11 are connected to the airflow generator 12 via a duct 4 (refer to FIG. 5), which will be described later, and are openings through which the airflow generated by the airflow generator 12 is blown out into the passenger section 2 (cabin space 200). Specifically, the airflow generated by the airflow generator 12 is sent into the passenger section 2 from the air outlets 11 through the duct 4.

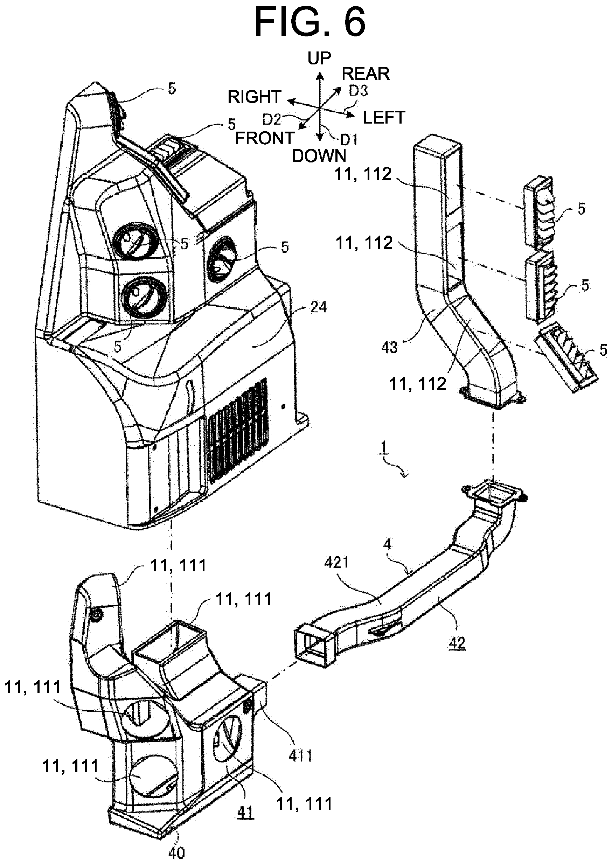

The airflow generation system 1 includes one or more air outlets 11, and include a plurality of air outlets 11 in this embodiment. The plurality of air outlets 11 are all opened toward the inside of the passenger section 2. Louvers 5 (refer to FIG. 6) for adjusting directions of airflow (wind directions) are attached to the respective air outlets 11. The louvers 5 are movable in two or more directions among a vertical direction, a horizontal direction, and a rotational direction. Thus, the passenger H1 can adjust directions of the airflow blown out from the air outlets 11 by operating the louvers 5. Furthermore, the louvers 5 can also close the air outlets 11, and when some of the louvers 5 of the plurality of air outlets 11 are closed, the airflow is blown out only from the remaining air outlets 11.

The plurality of air outlets 11 are all located on the right side in the right-left direction D3 when viewed from the passenger seat 21. Specifically, the plurality of air outlets 11 are arranged in a concentrated manner on the right side in the passenger section 2 because the passenger H1 gets in and out of the passenger section 2 from the left side (door 201) of the passenger section 2. Therefore, for example, when the passenger H1 (operator) sits on the passenger seat 21, the airflow from the air outlets 11 located on the right side as viewed from the passenger H1 may be blocked by the passenger H1 and may not easily reach the space on the left side as viewed from the passenger H1.

Therefore, in this embodiment, by employing the following configuration, the airflow generation system 1 and the work machine 3 in which the passenger H1 is unlikely to block the airflow are realized.

That is, in the airflow generation system 1 according to this embodiment, a direction in which the passenger seat 21 and the wall portion 22 face each other is defined as a first direction, and a direction orthogonal to the first direction in a plan view is defined as a second direction. In this case, the air outlets 11 are disposed on one side in the second direction when viewed from the passenger seat 21, and allow the airflow to pass through the gap space 23 (refer to FIG. 11) between the passenger seat 21 and the wall portion 22.

In this embodiment, the passenger seat 21 and the wall portion 22 face each other in the front-rear direction D2 (via the gap space 23). Therefore, in this embodiment, the front-rear direction D2 is an example of the "first direction", and the right-left direction D3 is an example of the "second direction". That is, the air outlets 11 are disposed on one side (right side) in the right-left direction D3 (second direction) when viewed from the passenger seat 21, and the airflow passes through the gap space 23 between the passenger seat 21 and the wall portion 22 from the right side.

According to this configuration, although the air outlets 11 are disposed on one side (right side) in the right-left direction D3 (second direction) when viewed from the passenger seat 21, an airflow from the air outlets 11 is delivered to the other side (left side) in the right-left direction D3 (second direction) through the gap space 23 between the passenger seat 21 and the wall portion 22 facing in the front-rear direction D2 (first direction). That is, in the airflow generation system 1, an airflow can be sent from the right side, which is one side in the right-left direction D3 (second direction), to the left side, which is the other side, using the gap space 23 between the wall portion 22 and the passenger seat 21 on which the passenger H1 is seated. Therefore, for example, even when the passenger H1 (operator) sits on the passenger seat 21, an airflow from the air outlets 11 located on the right side as viewed from the passenger H1 may easily reach the space on the left side as viewed from the passenger H1 without being blocked by the passenger H1. As a result, it is possible to realize the airflow generation system 1 and the work machine 3 in which the passenger H1 is unlikely to block the airflow.

As illustrated in FIGS. 5 to 10, the airflow generation system 1 includes the duct 4. An introduction port 40 of the duct 4 is connected to the airflow generator 12, and the duct 4 takes in an airflow generated by the airflow generator 12 from the introduction port 40. The plurality of air outlets 11 are formed in the duct 4, and an airflow supplied from the airflow generator 12 to the duct 4 is blown out from the plurality of air outlets 11.

In this embodiment, as illustrated in FIGS. 5 and 6, the duct 4 includes an upstream duct 41, a relay duct 42, and a downstream duct 43. The introduction port 40 connected to the airflow generator 12 is formed in the upstream duct 41. The relay duct 42 is a pipe for communicating the upstream duct 41 with the downstream duct 43. The air outlets 11 are formed in the upstream duct 41 and the downstream duct 43. Hereinafter, when the air outlets 11 of the upstream duct 41 and the air outlets 11 of the downstream duct 43 are distinguished from each other, the air outlets 11 of the upstream duct 41 may be referred to as "first air outlets 111", and the air outlets 11 of the downstream duct 43 may be referred to as "second air outlets 112".

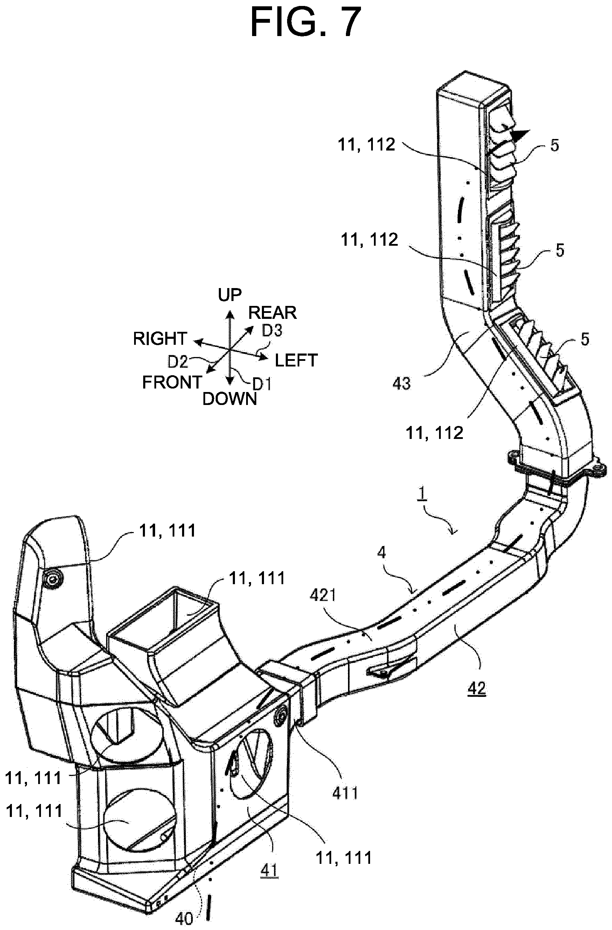

As illustrated in FIG. 7, the upstream duct 41, the relay duct 42, and the downstream duct 43 are combined in this order from the upstream side, that is, a side near the airflow generator 12. Therefore, an airflow generated by the airflow generator 12 is blown out from the first air outlets 111 of the upstream duct 41, also passes through the upstream duct 41, the relay duct 42, and the downstream duct 43 in this order, and is blown out from the second air outlets 112 of the downstream duct 43. In FIG. 7, the airflow blown out from the air outlets 11 (second air outlets 112) of the downstream duct 43 is illustrated by imaginary lines (two dot chain lines).

The upstream duct 41 is disposed on a front side in the front-rear direction D2 and on a right side in the right-left direction D3 when viewed from the passenger seat 21. In this embodiment, the upstream duct 41 is disposed at a position covered by the instrument panel 24. The introduction port 40 connected to the airflow generator 12 is formed in a lower surface of the upstream duct 41. Therefore, the airflow is taken into the upstream duct 41 from the airflow generator 12 located below. Furthermore, a coupling portion 411 for coupling with the relay duct 42 is disposed on a rear surface of the upstream duct 41. The upstream duct 41 is a hollow member, and an inside of the upstream duct 41 forms a single continuous space.

The upstream duct 41 has the plurality of (here, five) air outlets 11 (first air outlets 111). The plurality of first air outlets 111 include three first air outlets 111 opening leftward in the right-left direction D3, one first air outlet 111 opening rearward in the front-rear direction D2, and one first air outlet 111 opening upward in the up-down direction D1. In particular, two of the three first air outlets 111 facing leftward in the right-left direction D3 are directed obliquely forward. In the instrument panel 24, the louvers 5 are attached at positions corresponding to the plurality of first air outlets 111 of the upstream duct 41. Therefore, in a state where the upstream duct 41 and the instrument panel 24 are combined with each other, the louvers 5 are disposed so as to correspond to the plurality of first air outlets 111 of the upstream duct 41.

The relay duct 42 is a rectangular tubular duct extending in the front-rear direction D2. A front end portion of the relay duct 42 is coupled to the coupling portion 411 provided on a rear surface of the upstream duct 41, and the relay duct 42 is configured to extend rearward from the coupling portion 411. A rear end portion of the relay duct 42 is coupled to one end portion (lower end portion) of the downstream duct 43. That is, in this embodiment, the upstream duct 41 and the downstream duct 43 are spaced apart from each other in the front-rear direction D2, and the relay duct 42 connects the upstream duct 41 and the downstream duct 43 to each other. A rear end portion of the relay duct 42 coupled to the downstream duct 43 is opened upward. The relay duct 42 is a hollow member, and an inside thereof constitutes one continuous space.

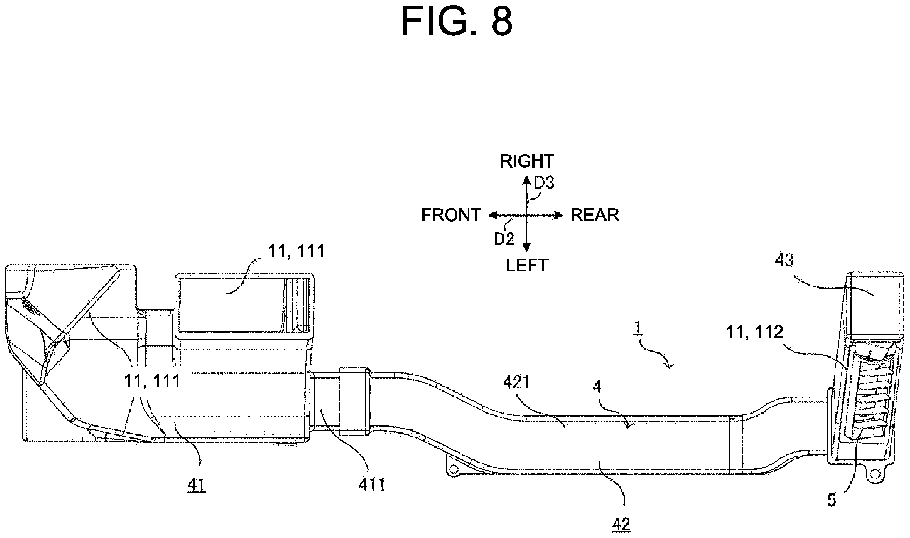

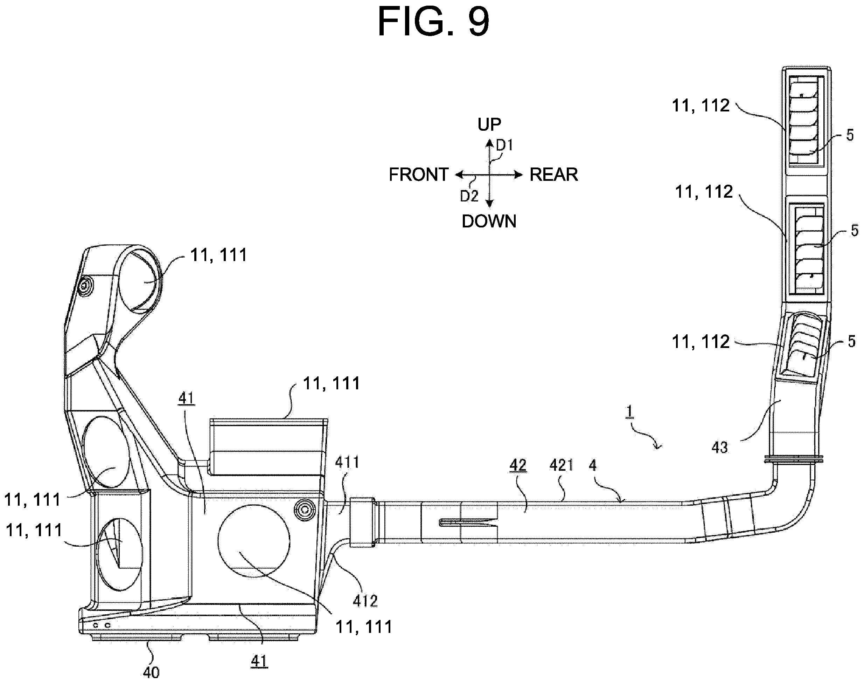

More specifically, as illustrated in FIG. 8, the relay duct 42 has a partially bent or curved shape such that a center portion in the longitudinal direction (front-rear direction D2) is closer to the passenger seat 21 side (left side) in the right-left direction D3 than opposite end portions in the longitudinal direction in a plan view. Furthermore, as illustrated in FIG. 9, in a side view, an upper surface 421 of the relay duct 42 has a gradient in at least a portion thereof. Specifically, the upper surface 421 of the relay duct 42 has, in at least a portion in the front-rear direction D2, a gradient inclined with respect to a horizontal plane so as to be lowered toward the front side. Accordingly, for example, even when water droplets, such as rainwater or dew condensation water, adhere to the upper surface 421 of the relay duct 42, the water droplets are less likely to remain on the upper surface 421 of the relay duct 42. In particular, in a case where the airflow generation system 1 is applied to the passenger section 2 of the canopy type or the floor type, rainwater may enter, and thus it is useful that water droplets are less likely to stay due to the gradient.

The downstream duct 43 is a rectangular tubular duct extending in the up-down direction D1. The downstream duct 43 is disposed on a slightly rear side in the front-rear direction D2 and on a right side in the right-left direction D3 when viewed from the passenger seat 21. A lower end portion of the downstream duct 43 is coupled the rear end portion of the relay duct 42, and the downstream duct 43 is configured to extend upward from the relay duct 42. In this embodiment, the downstream duct 43 is disposed at a position facing the gap space 23 between (the backrest portion 212 of) the passenger seat 21 and the wall portion 22 from the right side. The downstream duct 43 is a hollow member, and an inside of the downstream duct 43 forms a single continuous space.

The downstream duct 43 has the plurality of (here, three) air outlets 11 (second air outlets 112). The plurality of second air outlets 112 are formed on a left side surface of the downstream duct 43, and include the three second air outlets 112 that open leftward in the right-left direction D3. These three second air outlets 112 are arranged side by side in the up-down direction D1, and in particular, one of the second air outlets 112 which is positioned at a lowermost stage is directed obliquely upward. Each of the second air outlets 112 is formed in a rectangular shape having a length in a longitudinal direction (up-down direction D1) of the downstream duct 43. The three second air outlets 112 have the respective louvers 5 attached thereto.

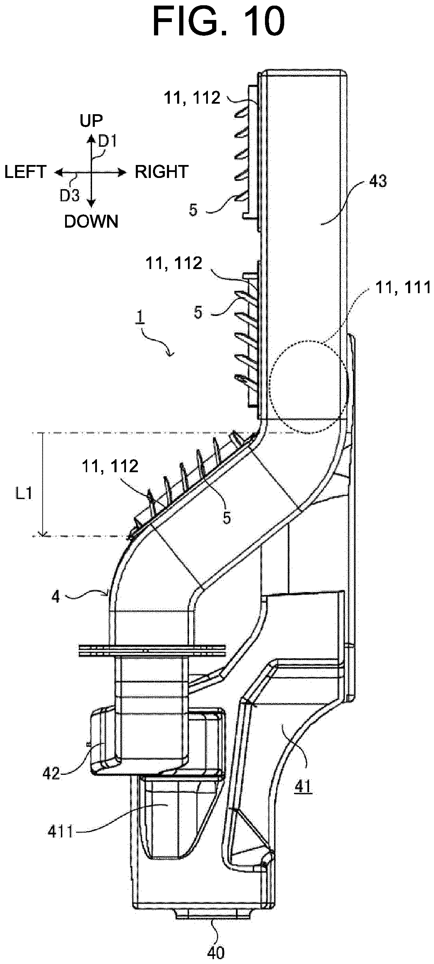

More specifically, as illustrated in FIG. 9, the downstream duct 43 has a partially bent or curved shape such that an upper end portion is shifted rearward in the front-rear direction D2 as compared with a lower end portion in a side view. Furthermore, as illustrated in FIG. 10, in a rear view, at least a portion of the downstream duct 43 in the longitudinal direction (up-down direction D1) has a shape inclined with respect to the up-down direction D1 so as to be further away from the passenger seat 21 in the right-left direction D3 toward an upper end. Thus, although the downstream duct 43 has a shape having a length in the up-down direction D1, a space in the passenger section 2 is hardly occupied by the downstream duct 43, and the passenger H1 seated on the passenger seat 21 is less likely to feel a sense of pressure.

Here, as illustrated in FIG. 9, the coupling portion 411 of the upstream duct 41, which is connected to the relay duct 42, has a tapered shape that becomes thinner toward a tip end (rear end). Specifically, the lower surface 412 of the coupling portion 411 is inclined obliquely rearward, thereby realizing the tapered shape. According to the coupling portion 411 having such a shape, since an airflow passes through the coupling portion 411 along the lower surface 412, the airflow taken into the upstream duct 41 from the lower surface (introduction port 40) easily flows into the relay duct 42 through the coupling portion 411. In other words, the airflow generated by the airflow generator 12 is easily branched to the downstream duct 43 in the upstream duct 41 (via the relay duct 42). As a result, a sufficient amount of airflow is also sent to the downstream duct 43.

In this embodiment, the air outlets 11 that cause an airflow to pass through the gap space 23 between the passenger seat 21 and the wall portion 22 are the second air outlets 112 of the downstream duct 43. As a result, the presence of the second air outlets 112 disposed in the downstream duct 43 realizes the airflow generation system 1 in which the passenger H1 is unlikely to block the airflow. Therefore, a more detailed configuration of the second air outlets 112 of the downstream duct 43 will be described below with reference to FIGS. 11 to 13. Hereinafter, unless otherwise specified, the term "air outlets 11" refers to the second air outlets 112 of the downstream duct 43.

First, the air outlets 11 are disposed adjacent to the wall portion 22 in the passenger section 2. Specifically, since the downstream duct 43 is disposed at a position facing the gap space 23 between (the backrest portion 212 of) the passenger seat 21 and the wall portion 22 from the right, the air outlets 11 provided in the downstream duct 43 are positioned immediately in front of the wall portion 22 so as to be adjacent to the wall portion 22. Accordingly, the airflow blown out of the air outlets 11 is guided by the wall portion 22 and is easily introduced into the gap space 23 between the passenger seat 21 and the wall portion 22.

Furthermore, the air outlets 11 are disposed near the wall portion 22 when viewed from the seat surface portion 211 of the passenger seat 21 in the first direction (the front-rear direction D2). That is, since the downstream duct 43 is disposed behind (near the wall portion 22) the seat surface portion 211 of the passenger seat 21 in the front-rear direction D2 (first direction), the air outlets 11 disposed in the downstream duct 43 are also located behind (near the wall portion 22) the seat surface portion 211 of the passenger seat 21. Thus, the airflow blown out from the air outlets 11 is less likely to directly hit the passenger H1 seated on the passenger seat 21.

Furthermore, the air outlets 11 are opened toward the other side in the second direction (right-left direction D3). That is, the downstream duct 43 is disposed on the right side in the right-left direction D3 (one side in the second direction) when viewed from the passenger seat 21, and the air outlets 11 are provided on the left side surface of the downstream duct 43. Therefore, the air outlets 11 provided in the downstream duct 43 are opened toward the left side in the right-left direction D3 (the other side in the second direction). Thus, the airflow from the air outlets 11 is basically blown out toward the other side (the left side) in the second direction (the right-left direction D3), and easily reaches a space on the other side (the left side) in the second direction (the right-left direction D3) when viewed from the passenger H1.

Furthermore, the air outlets 11 allow an airflow to pass along the wall portion 22 to the gap space 23. Specifically, since the downstream duct 43 is disposed at a position facing the gap space 23 between (the backrest portion 212 of) the passenger seat 21 and the wall portion 22 from the right, an airflow from the air outlets 11 provided in the downstream duct 43 passes the gap space 23 along the wall portion 22. Thus, the airflow from the air outlets 11 easily reaches the space on the other side (the left side) in the second direction (the right-left direction D3) when viewed from the passenger H1, since a direction of the airflow is controlled by the wall portion 22 serving as a guide.

Furthermore, the air outlets 11 are directed obliquely upward. In this embodiment, of the three air outlets 11 provided in the downstream duct 43, the air outlet 11 located at a lowermost stage is directed obliquely upward (refer to FIG. 10). In this way, the airflow blown out from the air outlet directed obliquely upward is likely to reach farther, and is likely to reach the space on the left side when viewed from the passenger H1. In particular, when the airflow generation system 1 is in the cooling mode, even an airflow (cold air) flowing toward a low position easily reaches the space on the other side (left side) in the second direction (right-left direction D3) when viewed from the passenger H1.

Furthermore, the airflow generation system 1 according to this embodiment further includes the first air outlets 111 disposed on the side opposite to the wall portion 22 in the first direction (front-rear direction D2) when viewed from the passenger seat 21 and facing the passenger seat 21, separately from the second air outlets 112 serving as the air outlets 11 that allow the airflow to pass the gap space 23 between the passenger seat 21 and the wall portion 22. That is, the airflow generation system 1 includes the first air outlets 111 provided in the upstream duct 41 separately from the second air outlets

112 provided in the downstream duct 43. Since the upstream duct 41 is disposed on a front side in the front-rear direction D2 when viewed from the passenger seat 21, the first air outlets 111 provided in the upstream duct 41 are also located on a front side in the front-rear direction D2 (on the side opposite to the wall portion 22 in the first direction) when viewed from the passenger seat 21. Of the plurality of first air outlets 111, at least one first air outlet 111 that opens rearward in the front-rear direction D2 faces the passenger seat 21. Thus, the airflow can be directly blown out from the first air outlet 111 toward the passenger H1 seated on the passenger seat 21.

Here, lower ends of the second air outlets 112 as the air outlets 11 which allow the airflow to pass through the gap space 23 between the passenger seat 21 and the wall portion 22 are located at positions lower than lower ends of the first air outlets 111. In this embodiment, the lower end of the second air outlet 112 positioned at the lowermost stage is positioned below the lower end of the first air outlet 111 opened rearward by a distance L1 (refer to FIG. 10). In this way, since the position of the first air outlet 111 from which the airflow is blown out rearward and the position of the second air outlet 112 from which the airflow is blown out rightward are shifted from each other in the up-down direction D1, the airflow from the first air outlet 111 is unlikely to interfere with the airflow from the second air outlet 112. As a result, the airflow from the second air outlet 112 easily reaches the space on the other side (left side) in the second direction (right-left direction D3) when viewed from the passenger H1.

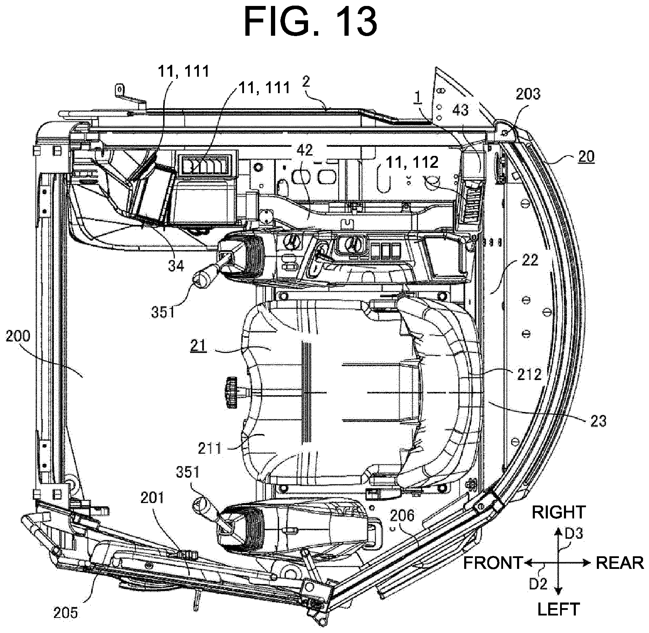

In addition, as illustrated in FIG. 13, of inner surfaces of the passenger section 2, an inner surface located on the side opposite to the air outlets 11 when viewed from the gap space 23 in a plan view includes an inclined surface 206 inclined with respect to both the first direction (front-rear direction D2) and the second direction (right-left direction D3). In this embodiment, the inner surface (the surface near the cabin space 200) of the panel member 205 constituting a left rear corner portion of the cabin 20 constituting the outer shell of the passenger section 2 constitutes the inclined surface 206. The inner surface of the panel member 205 may include a curved surface, and even in this case, the curved surface includes the inclined surface 206 when viewed microscopically. With the inclined surface 206, the airflow from the second air outlet 112 reaches the space on the other side (the left side) in the second direction (the right-left direction D3) when viewed from the passenger H1, and then is directed forward in the first direction (the front-rear direction D2) by the inclined surface 206.

Therefore, the airflow from the second air outlet 112 also easily reaches the space on the left front side when viewed from the passenger H1.

### 4 Simulation Result

Next, a result of a simulation of an airflow generated by the airflow generation system 1 according to this embodiment will be described with reference to FIG. 14.

FIG. 14 schematically illustrates the relationship between each of the six observation points P1 to P6 defined by the standard, such as ISO (International Organization for Standardization) or EN (European Norm), and an airflow.

Here, the observation point P1 is set on a left side of a foot of the passenger H1, the observation point P2 is set on a right side of the foot of the passenger H1, the observation point P3 is set on the left side of a waist of the passenger H1, and the observation point P4 is a virtual point set on the right side of the waist of the passenger H1. Furthermore, the observation point P5 is set behind a head of the passenger H1, and the observation point P6 is a virtual point set in front of a thorax of the passenger H1.

In FIG. 14, a flow velocity (wind velocity) of an airflow is indicated by a color (shade color), and legends thereof are illustrated in a lower portion in the drawing. Furthermore, a perspective view of the passenger section 2 as viewed from the front side is illustrated on a left side in FIG. 14, and a perspective view of the passenger section 2 as viewed from the rear side is illustrated on a right side in FIG. 14. Moreover, in FIG. 14, it is assumed that, among the plurality of second air outlets 112 provided in the downstream duct 43, the two second air outlets 112 from the bottom are in a state of being closed by the louvers 5, and the airflow is blown out only from the second air outlet 112 at the uppermost stage. The directions (wind direction) of the airflow from the individual air outlets 11 may be changed as appropriate by the louvers 5.

As is apparent from FIG. 14, the airflow from the second air outlets 112 positioned on the right side of the passenger H1 passes through the gap space 23 between the passenger seat 21 and the wall portion 22, reaches the space on the left side of the passenger H1, and reaches the observation point P3. The airflow from the first air outlets 111 reaches the other observation points P1, P2, P4 to P6. As a result, the airflow from the airflow generation system 1 can reach substantially the entire region of the space in the passenger section 2 (cabin space 200). Therefore, when the airflow generation system 1 is an air-conditioning system that performs cooling or heating, an air temperature in the passenger section 2 may be adjusted to be substantially uniform.

As described above, the airflow generation system 1 according to this embodiment is used for the work machine 3 having the passenger section 2 including the passenger seat 21 and the wall portion 22. When a direction in which the passenger seat 21 and the wall portion 22 face each other is defined as the first direction (front-rear direction D2) and a direction orthogonal to the first direction in a plan view is defined as the second direction (right-left direction D3), the airflow generation system 1 causes an airflow to pass through the gap space 23 between the passenger seat 21 and the wall portion 22 from one side (right side) to the other side (left side) in the second direction when viewed from the passenger seat 21. As a result, it is possible to realize the airflow generation system 1 and the work machine 3 in which the passenger H1 is unlikely to block an airflow.

### 5 Modifications

Modifications of the first embodiment will be listed below. The modifications described below may be applied in appropriate combination.

The shape, the size, the number, the arrangement, and the like of the air outlets 11 in the airflow generation system 1 are not limited to those described in the first embodiment. For example, one first air outlet 111 and one second air outlet 112 may be provided.

The passenger section 2 is not limited to a cabin type, and may be, for example, a canopy type or a floor type. The canopy type or floor type passenger section 2 does not include the door 201 but includes an entrance for the passenger H1 to get on and off the passenger section 2. For example, in a case of a floor-type passenger section 2, since there is no structure on an upper side of an entrance, the entrance is opened upward.

Arrangement of the entrance, such as the door 201, is not limited to arrangement on the left (left side) in the passenger section 2 as described in the first embodiment. That is, the entrance for the passenger H1 to get on and off may be disposed on at least one side in the right-left direction D3 in the passenger section 2, and may be disposed on the right (right side) of the passenger section 2 or on opposite sides in the right-left direction D3, for example. When the entrance is located on the right (right side) of the passenger section 2, the air outlets 11 of the airflow generation system 1 are preferably located on the left as viewed from the passenger seat 21. In this case, the air outlets 11 are disposed on one side (left side) in the right-left direction D3 (second direction) when viewed from the passenger seat 21, and the airflow passes through the gap space 23 between the passenger seat 21 and the wall portion 22 to the other side (right side) in the right-left direction D3 (second direction).

Further, the "first direction" and the "second direction" are not limited to the examples described in the first embodiment.

For example, when the passenger seat 21 and the wall portion 22 face each other in the right-left direction D3 (via the gap space 23), the right-left direction D3 is the "first direction", and the front-rear direction D2 is the "second direction". Furthermore, the wall portion 22 is only required to face the passenger seat 21 in the first direction, and the wall portion 22 may be located on the front side, the left side, or the right side when viewed from the passenger seat 21.

The airflow generation system 1 is not limited to an air conditioning system, and may be, for example, a ventilation system, an air purification system, a deodorization system, a disinfection system, a humidity control (humidification) system, or a combination thereof. Furthermore, the airflow generator 12 may be a fan or the like disposed on the downstream of an airflow as long as the airflow generator 12 can generate the airflow, and may generate an airflow by a negative pressure.

The power source of the work machine 3 is not limited to the diesel engine. For example, the power source of the work machine 3 may be an engine other than the diesel engine, may be a motor (electric motor), or may be a hybrid power source that includes the engine and the motor (electric motor).

The display device 34, the operation device 35, and so on are not limited to be installed in the machine body 30, but may be installed separately from the machine body 30, for example. In this case, the display device 34, the operation device 35, and so on are configured to communicable with the machine body 30 and enable a remote operation of the machine body 30.

Furthermore, the airflow generation system 1 may not include the duct 4. Moreover, the duct 4 may not be divided into three members of the upstream duct 41, the relay duct 42, and the downstream duct 43, and may be constituted by one member, two members, or four or more members.

Furthermore, the air outlets 11 (the second air outlets 112) may not be disposed adjacent to the wall portion 22 in the passenger section 2. The air outlets 11 (the second air outlets 112) may not be disposed near the wall portion 22 when viewed from the seat surface portion 211 of the passenger seat 21 in the first direction. The air outlets 11 (the second air outlets 112) may not open toward the other side in the second direction.

The air outlets 11 (second air outlets 112) may not allow an airflow along the wall portion 22 to pass through the gap space 23.

In addition, the first air outlets 111 which are disposed on the side opposite to the wall portion 22 in the first direction when viewed from the passenger seat 21 and which face the passenger seat 21 is not a necessary configuration of the airflow generation system 1, that is, the first air outlets 111 may be appropriately omitted. The air outlets 11 (the second air outlets 112) may not direct obliquely upward. In addition, the inner surface located on the side opposite to the air outlets 11 (second air outlets 112) when viewed from the gap space 23 in a plan view among the inner surfaces of the passenger section 2 may not include the inclined surface 206.

### Second Embodiment

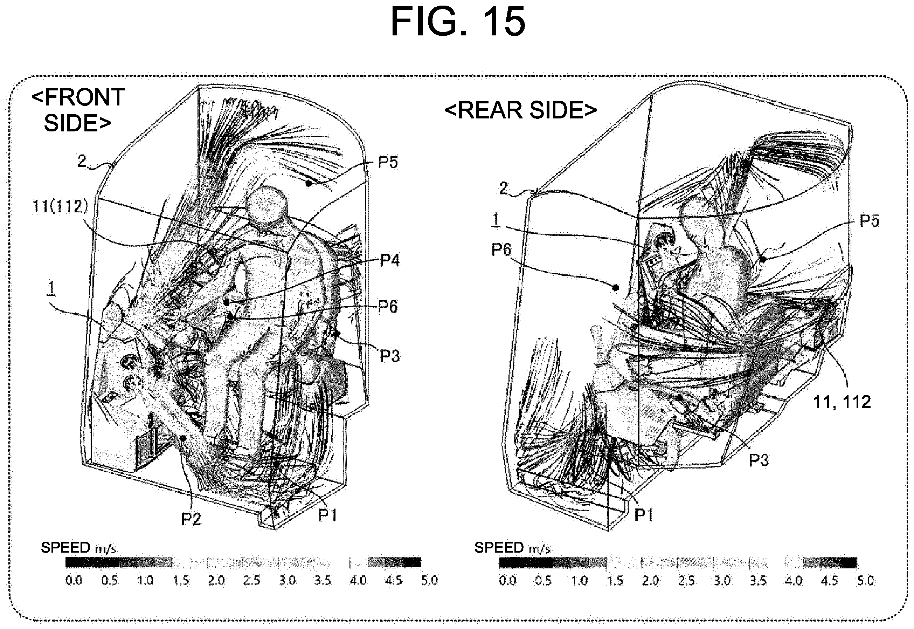

As illustrated in FIG. 15, an airflow generation system 1 according to a second embodiment is different from the airflow generation system 1 according to the first embodiment in the arrangement of the air outlets 11 (second air outlets 112). Hereinafter, the same components as those in the first embodiment will be denoted by the same reference signs, and the descriptions thereof will appropriately be omitted.

In this embodiment, as illustrated in FIG. 15, two second air outlets 112 are omitted from an upper portion of a downstream duct 43, and the downstream duct 43 is configured to be short. Similarly to FIG. 14, FIG. 15 is an explanatory view of a simulation result of an airflow, showing, on a left side, a perspective view of a passenger section 2 viewed from a front side, and showing, on a right side, a perspective view of the passenger section 2 viewed from a rear side.

As is apparent from FIG. 15, even in the airflow generation system 1 according to this embodiment, an airflow from second air outlets 112 positioned on the right side of a passenger H1 passes through a gap space 23 between a passenger seat 21 and a wall portion 22, reaches a space on a left side of the passenger H1, and reaches an observation point P3. The airflow from first air outlets 111 reaches other observation points P1, P2, P4 to P6. As a result, the airflow from the airflow generation system 1 can reach substantially the entire region of the space in the passenger section 2 (cabin space 200). Therefore, when the airflow generation system 1 is an air-conditioning system that performs cooling or heating, an air temperature in the passenger section 2 may be adjusted to be substantially uniform.

The various configurations described in the second embodiment can be employed in combination with the various configurations (including variations) described in the first embodiment, as appropriate.

### Appendices

A summary of the present disclosure extracted from the above-described embodiments will be described below as supplementary notes. It should be noted that each configuration and processing function described in the appendices below may be selected, omitted, and combined as appropriate.

### Appendix 1

An airflow generation system that is employed in a work machine having a passenger section including a passenger seat and a wall portion, the airflow generation system comprising:
an airflow generator that generates an airflow; and
an air outlet that is disposed in a position facing the passenger section and that blows out the airflow to an inside of the passenger section, wherein
when a direction in which the passenger seat faces the wall portion is determined as a first direction and a direction orthogonal to the first direction in a plan view is determined as a second direction, the air outlet is disposed on one side in the second direction when viewed from the passenger seat to allow the airflow to pass through a gap space formed between the passenger seat and the wall portion.

### Appendix 2

The airflow generation system according to Appendix 1, wherein the air outlet is formed adjacent to the wall portion in the passenger section.

### Appendix 3

The airflow generation system according to Appendix 1 or 2, wherein the air outlet is formed on a side near the wall portion when viewed from a seat surface portion of the passenger seat in the first direction.

### Appendix 4

The airflow generation system according to any one of Appendices 1 to 3, wherein the air outlet is open toward the other side in the second direction.

### Appendix 5

The airflow generation system according to any one of Appendices 1 to 4, wherein the air outlet allows the airflow along the wall portion to pass through the gap space.

### Appendix 6

The airflow generation system according to any one of Appendices 1 to 5, further comprising:
a first air outlet that is disposed on a side opposite to the wall portion in the first direction when viewed from the passenger seat and that faces the passenger seat, wherein
a lower end of a second air outlet as the air outlet is located at a position lower than a lower end of the first air outlet.

### Appendix 7

The airflow generation system according to any one of Appendices 1 to 6, wherein the air outlet is opened obliquely upward.

### Appendix 8

The airflow generation system according to any one of Appendices 1 to 7, wherein an inner surface located on a side opposite to the air outlet when viewed from the gap space in a plan view, among inner surfaces of the passenger section, includes an inclined surface that is inclined relative to both the first and second directions.

### Appendix 9

An airflow generation system that is employed in a work machine having a passenger section including a passenger seat and a wall portion, wherein
when a direction in which the passenger seat faces the wall portion is determined as a first direction and a direction orthogonal to the first direction in a plan view is determined as a second direction, an airflow is allowed to pass through a gap space formed between the passenger seat and the wall portion from one side of the second direction to the other when viewed from the passenger seat.

### Appendix 10

A work machine, comprising:
the airflow generation system according to any one of Appendices 1 to 9; and
a machine body on which the airflow generation system is mounted.

### REFERENCE SIGNS LIST

1 airflow generation system
2 passenger section
11 air outlet
12 airflow generator
21 passenger seat
22 wall portion
23 gap space
111 first air outlet
112 second air outlet
206 inclined surface
D2 front-rear direction (first direction)
D3 right-left direction (second direction)

## Claims

1. An airflow generation system that is employed in a work machine having a passenger section including a passenger seat and a wall portion, the airflow generation system comprising:
an airflow generator that generates an airflow; and
an air outlet that is disposed in a position facing the passenger section and that blows out the airflow to an inside of the passenger section, wherein
when a direction in which the passenger seat faces the wall portion is determined as a first direction and a direction orthogonal to the first direction in a plan view is determined as a second direction, the air outlet is disposed on one side in the second direction when viewed from the passenger seat to allow the airflow to pass through a gap space formed between the passenger seat and the wall portion.

2. The airflow generation system according to claim 1, wherein the air outlet is formed adjacent to the wall portion in the passenger section.

3. The airflow generation system according to claim 1 or 2, wherein the air outlet is formed on a side near the wall portion when viewed from a seat surface portion of the passenger seat in the first direction.

4. The airflow generation system according to claim 1 or 2, wherein the air outlet is open toward the other side in the second direction.

5. The airflow generation system according to claim 1 or 2, wherein the air outlet allows the airflow along the wall portion to pass through the gap space.

6. The airflow generation system according to claim 1 or 2, further comprising:
a first air outlet that is disposed on a side opposite to the wall portion in the first direction when viewed from the passenger seat and that faces the passenger seat, wherein
a lower end of a second air outlet as the air outlet is located at a position lower than a lower end of the first air outlet.

7. The airflow generation system according to claim 1 or 2, wherein the air outlet is opened obliquely upward.

8. The airflow generation system according to claim 1 or 2, wherein an inner surface located on a side opposite to the air outlet when viewed from the gap space in a plan view, among inner surfaces of the passenger section, includes an inclined surface that is inclined relative to both the first and second directions.

9. An airflow generation system that is employed in a work machine having a passenger section including a passenger seat and a wall portion, wherein
when a direction in which the passenger seat faces the wall portion is determined as a first direction and a direction orthogonal to the first direction in a plan view is determined as a second direction, an airflow is allowed to pass through a gap space formed between the passenger seat and the wall portion from one side of the second direction to the other when viewed from the passenger seat.

10. A work machine, comprising:
the airflow generation system according to claim 1 or 2; and
a machine body on which the airflow generation system is mounted.
